# EUROPEAN PATENT SPECIFICATION

(11) **EP 2 368 697 B1**
(45) Date of publication and mention of the grant of the patent: **11.07.2012**
(21) Application number: 10400019.5
(22) Date of filing: 25.03.2010
(51) Int. Cl.: B29C 70/08, B29C 65/50, B29K 307/04, B29K 105/12

(54) **Reinforced composite part composed of an assembly of at least two different composite members**
Verstärktes Verbundstoffteil aus einer Anordnung von mindestens zwei verschiedenen Verbundstoffelementen
Pièce composite renforcée composée d'un ensemble d'au moins deux éléments composites différents

(43) Date of publication of application: 28.09.2011
(73) Proprietor: Eurocopter Deutschland GmbH, 86609 Donauwörth (DE)
(72) Inventor: Wellhausen, Christian, 85521 Ottobrunn (DE); Kunze, Steffen, 83620 Vagen (DE); Roser, Tim, 86609 Donauwörth (DE)
(74) Representative: Pouillot, Laurent Pierre Paul

(56) References cited:
- US-A1- 2009 117 363

## Description

The present invention generally concerns the manufacture of parts made of metallic or organic materials comprising, for example, reinforcing fibres and a resin-type impregnation matrix. These parts or members thereof are obtained, for example, by moulding a fibre-reinforced composite material.

More specifically, the present invention concerns the manufacture of composite parts composed of several different members assembled in a manner ensuring good and reliable adhesion of said members. These members may, for example, form a hybrid assembly with a pre-impregnated member («prepreg») and a member requiring the infusion of an impregnation matrix prior to simultaneous or individual curing of the members. The invention also concerns other types of assemblies.

Hereinafter, specific reference will be made to intermediate reinforced composite parts. Such parts are referred to as intermediate because, after the assembly of their constituent members, a bonding agent or at least one of said members must still undergo an impregnation and/or curing process.

For example, document DE 10 2005 008 252 describes a process to assemble two members composed of fibre-reinforced composite materials with different matrix structures. The two matrices are fluidified in a time-shifted manner, with the fluidification of the first matrix ensuring penetration into the surface layer of the second matrix, followed by the fluidification of said second matrix and the simultaneous curing of both matrices. A mechanical bond is then obtained through adhesion with random-shaped constituent materials of the cured and interpenetrated matrices in a surface layer. However, with such an assembly, it is difficult to obtain a homogeneous bond over a large surface.

In addition, document EP 1 916 091 describes a complex two-member assembly process wherein a thermoplastic sheet is used at the interface between two fibre-reinforced composite material members. The faces of the thermoplastic sheet have different properties so as to optimise the bond with the different matrix structures of said members. The use of a thermoplastic sheet poses the disadvantage of weakening the stability and mechanical bonding strength of the cured assembly. The performance characteristics of such an assembly are therefore significantly reduced. The thermoplastic sheet constitutes a distinct phase in a resin-type matrix environment. This results in limited performance, particularly in terms of the mechanical bonding properties and thermal stability of the assembly.

The document US 2009117363 A1 discloses a hybrid nanocomposite architecture including a first composite ply oriented at a first orientation. The architecture also includes a carbon nanotube (CNT) film layer including a plurality of CNT pellets disposed therein, each of the CNT bundles including a plurality of CNTs extending from the bottom surface of the CNT film layer to a top surface of the CNT film layer, the CNT film layer disposed in an abutting relationship with the first composite ply. The architecture further includes a second composite ply which may be oriented at a second orientation, the second composite ply disposed in an abutting relationship with the CNT film layer, and wherein the CNTs of the CNT film layer act as a penetrating bridge across an interface between the first composite ply and the second composite ply.

The present invention therefore aims to propose a new assembly of different composite members without the above-mentioned disadvantages and with improved bonding performance and thermal stability.

Another aim of the present invention is to propose an assembly whose manufacture is technically simple, on the one hand, and not costly in terms of time and money, on the other hand.

Another aim of the present invention is to provide a new assembly applicable to identical, similar or different composite members and/or suited for a broad range of manufacturing processes.

The aims of the present invention are achieved by means of an intermediate reinforced composite part composed of an assembly of at least two composite members each comprising reinforcing fibres or fabrics which are impregnated/infused by an impregnation matrix, said assembly comprising a bonding agent ensuring a mechanical bond between said members, characterised in that the bonding agent comprises at least one carbon nanotube sheet ("Bucky Paper").

According to an exemplary embodiment of the present invention, the carbon nanotube sheet has a thickness of between 5 micrometers and 50 micrometers.

According to an exemplary embodiment of the present invention, the density of the carbon nanotubes is comprised between 1 and 3 g/cm³ thus providing the bonding agent with a determined porosity.

The term dry member is to be understood as referring to any member or structure comprising reinforcing fibres or fabrics not yet impregnated with a resin-type matrix.

According to an exemplary embodiment of the present invention, the composite assembly comprises a pre-impregnated member (prepreg) and a precured member.

According to an exemplary embodiment of the present invention, the composite assembly comprises precured members, the carbon nanotube sheet being associated with an adhesive layer on each face intended to come into contact with a precured member.

According to an exemplary embodiment of the present invention, the composite assembly comprises pre-impregnated members (prepregs).

The aims of the present invention are also achieved by means of a reinforced and cured composite structure comprising at least one intermediate reinforced composite part such as described above.

One advantage of the part according to the present invention is the absence of detrimental barrier effects generated by thermoplastic sheets in known assemblies. The properties and functions of the impregnation resins are not altered by the presence of a distinct phase between the constituent members of the assembly.

Another advantage of the part according to the present invention Is the possibility of avoiding unwanted mixtures or interpenetrations of matrices with different structures, particularly when forming a hybrid assembly comprising a pre-impregnated member and a dry member to be subsequently infused.

Another advantage of the part according to the present invention is the possibility of choosing a carbon nanotube sheet with a determined porosity, so as to control the porosity at the interface of the assembly.

Another advantage of the part according to the present invention is that the carbon nanotube sheet is chemically stable.

Another advantage of the part according to the present invention is that the carbon nanotube sheet comprises pure surfaces with good adhesive properties. These properties are present on each face of said sheet, thereby favouring bonding with resins or adhesives.

Another advantage of the part according to the present invention is that It becomes possible to change the electrical properties of the composite part (e.g. for electrical bonding and/or electro-magnetic compatibility.

The characteristics and advantages of the present invention will become more apparent from the following description of an illustrative exemplary embodiment, given with reference to the attached figures, where:
- figure 1 is a schematic cross-sectional view of an exemplary embodiment of an intermediate reinforced composite part which is not part of the present invention, comprising a pre-impregnated member and a dry member,
- figure 2 is a schematic cross-sectional view of another exemplary embodiment of an intermediate reinforced composite part according to the present invention, comprising a pre-impregnated member and a precured member,
- figure 3 is a schematic cross-sectional view of another exemplary embodiment of an intermediate reinforced composite part which is not part of the present invention, comprising a dry member and a precured member,
- figure 4 is a schematic cross-sectional view of another exemplary embodiment of an intermediate reinforced composite part according to the present invention, comprising two precured members,
- figure 5 is a schematic cross-sectional view of another exemplary embodiment of an intermediate reinforced composite part according to the present Invention, comprising two pre-impregnated members,
- figure 6 is a schematic cross-sectional view of another exemplary embodiment of an intermediate reinforced composite part which is not part of the present invention, comprising two dry members.

Structurally and functionally identical components appearing in different figures are assigned the same numerical or alphanumerical reference.

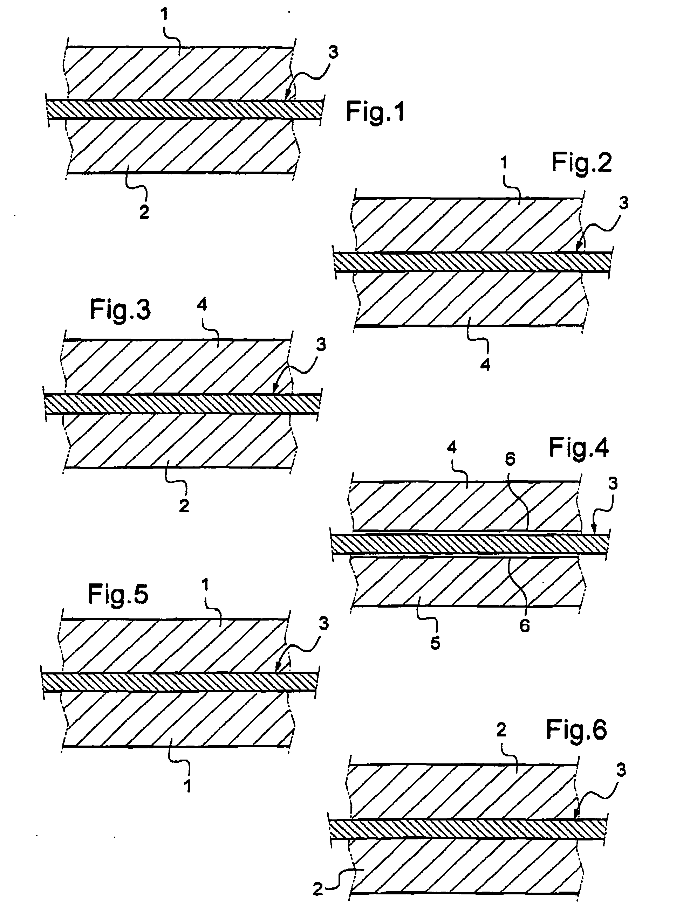

Figures 2, 4 and 5 show exemplary embodiments of an intermediate reinforced composite part according to the present invention composed of an assembly of at least two composite members 1,2,4,5 each comprising reinforcing fibres or fabrics and an impregnation matrix. The assemblies shown also comprise a bonding agent 3 ensuring a mechanical bond between said members.

The bonding agent 3 comprises at least one carbon nanotube sheet.

Preferably, the carbon nanotube sheet has a thickness of between 5 micrometers and 50 micrometers.

The density of the carbon nanotubes constituting the carbon nanotube sheet is advantageously comprised between 1 and 3 g/cm³ thus providing the bonding agent with a determined porosity.

The carbon nanotube sheet, also referred to as «free standing nanotube paper» or «bucky paper», is obtained, for example, through filtration of a solution containing purified carbon nanotubes. This filtration process is known as such.

The term «carbon nanotube sheet» is also to be understood as referring more generally to another materials or substrates, of the kind of semi-finished sheet of products made from carbon nanotubes.

Figure 1 shows an exemplary embodiment of an intermediate composite part which is not part of the present invention, comprising a pre-impregnated member (prepreg) 1 and a dry member 2 that is subsequently infused with an impregnation matrix once the assembly has been achieved.

This impregnation operation, known as such, is not described. The same applies to curing operations implemented in known industrial processes.

The structure of the impregnation matrix to be subsequently Infused into the dry member 2 may be identical, similar or different from that used to achieve the pre-impregnated member 1.

The intermediate reinforced composite part shown in figure 2 differs from that described above in that the dry member 2 is replaced with a procured member 4.

The intermediate reinforced composite part shown in figure 3 comprises a precured member 4 and a dry member 2 that is subsequently infused with an Impregnation matrix once the assembly has been achieved.

The intermediate reinforced composite part shown in figure 4 comprises procured members 4 and 5. The carbon nanotube sheet ("Bucky Paper)" is associated with an adhesive layer 6 on each face intended to come into contact with a precured member 4,5. The carbon nanotube sheet thereby improves the bonding power of the adhesive layers 6. The bonding agent 3 is therefore composed of the carbon nanotube sheet associated with the adhesive layers 6. Examples of adhesive layers 6 are adhesives called FM73 or FM300.

The intermediate reinforced composite part shown in figure 5 comprises pre-impregnated members (prepregs) 1.

The intermediate reinforced composite part shown in figure 6 comprises dry members 2 that are subsequently infused with an impregnation matrix once the assembly has been achieved.

In the exemplary embodiments shown In figures 1, 5 and 6, matrices with different, similar or identical structures can be used for the pre-impregnated members 1 or dry members 2 of the assembly. The choice of resin-type matrix depends in particular on the performance characteristics sought for the assembly and on the specific physical or chemical properties possibly sought on both sides of the bonding interface.

The impregnation matrices are for instance HexFlow RTM6, Henkel Epsilon variants, PR500/PR520, Cytec 977.

Based on these criteria, it is then possible to proceed with simultaneous curing of the assembly or individual curing of each constituent member thereof. Individual curing must be considered when the matrix structures require different temperature and/or pressure conditions, or when the assembly is used as a constituent member of another part or structure.

A reinforced and cured composite structure comprising at least one intermediate reinforced composite part such as described above can be advantageously used in particular in aeronautical, automotive and wind energy applications.

Naturally, the present invention can be subjected to numerous variations as to its implementation. Although various embodiments and implementations have been described herein, it will be readily understood that It is not conceivable to exhaustively identify all possible variations. The possibility of replacing one of the means described herein with an equivalent means can, of course, be considered without departing from the scope of the present invention, as defined in the appended claims.

## Claims

1. Intermediate reinforced composite part composed of an assembly of at least two composite members (1,2,4,5) each comprising reinforcing fibres or fabrics which are impregnated by impregnation matrix, said assembly comprising a bonding agent (3) ensuring a mechanical bond between said members (1,2,4,5), said bonding agent (3) comprising at least one carbon nanotube sheet,
**characterised in that** the composite assembly comprises precured members (4,5), the carbon nanotube sheet being associated with an adhesive layer (6) on each face intended to come into contact with a precured member (4,5).

2. Intermediate reinforced composite part according to claim 1,
**characterised in that** the carbon nanotube sheet has a thickness of between 5 micrometers and 50 micrometers.

3. Intermediate reinforced composite part according to claim 1 or 2,
**characterised in that** the density of the carbon nanotubes is comprised between 1 and 3 g/cm³, thus providing the bonding agent with a determined porosity.

4. Intermediate reinforced composite part according to any of claims 1 to 3,
**characterised in that** the composite assembly comprises a preimpregnated member (prepreg) (1) and a precured member (4).

5. Reinforced and cured composite structure comprising at least one intermediate reinforced composite part according to any of claims 1 to 4.

## Patentansprüche

1. Verstärktes Zwischenprodukt-Verbundstoffteil bestehend aus einer Anordnung von mindestens zwei Verbundstoffelementen (1, 2, 4, 5), die jeweils Verstärkungsfasern oder -gewebe aufweisen, die durch eine Imprägnierungsmatrix imprägniert sind, wobei die Anordnung ein Haftmittel (3) aufweist, welches eine mechanische Haftung zwischen den Elementen (1, 2, 4, 5) vermittelt, wobei das Haftmittel (3) mindestens eine Kohlenstoffnanoröhrchen-Folie aufweist,
**dadurch gekennzeichnet, dass** die Verbundstoffanordnung vorgehärtete Elemente (4, 5) aufweist, und die Kohlenstoffnanoröhrchen-Folie mit einer klebenden Schicht (6) auf jeder Seite verbunden ist, die dazu bestimmt ist, mit einem vorgehärteten Element (4, 5) in Kontakt zu kommen.

2. Verstärktes Zwischenprodukt-Verbundstoffteil nach Anspruch 1, **dadurch gekennzeichnet, dass** die Kohlenstoffnanoröhrchen-Folie eine Dicke zwischen 5 µm und 50 µm aufweist.

3. Verstärktes Zwischenprodukt-Verbundstoffteil nach Anspruch 1 oder 2,
**dadurch gekennzeichnet, dass** die Dichte der Kohlenstoffnanoröhrchen zwischen 1 bis 3 g/cm³ beträgt, und somit dem Haftmittel eine vorbestimmte Porosität vermittelt.

4. Verstärktes Zwischenprodukt-Verbundstoffteil nach einem der Ansprüche 1 bis 3,
**dadurch gekennzeichnet, dass** die Verbundstoffanordnung ein vorimprägniertes Element (Prepreg) (1) und ein vorgehärtetes Element (4) aufweist.

5. Verstärkte und gehärtete Verbundstruktur mit mindestens einem verstärkten Zwischenprodukt-Verbundstoffteil nach einem der Ansprüche 1 bis 4.

## Revendications

1. Une pièce intermédiaire en composite renforcé, constituée d'un ensemble d'au moins deux éléments composite (1, 2, 4, 5) en tissus ou fibres renforcés imprégnés grâce à une matrice d'imprégnation, ledit ensemble comprenant un liant (3) garantissant le lien mécanique entre lesdits éléments (1, 2, 4, 5), ledit liant (3) comprenant au moins une plaque en nanotubes de carbone,
**caractérisée en ce que** l'ensemble composite comprend les éléments prédurcis (4, 5), la plaque en nanotubes de carbone devant être associée à une couche d'adhésif (6) afin d'entrer en contact avec un des éléments prédurcis (4, 5).

2. La pièce intermédiaire en composite renforcé selon la revendication 1,
**caractérisée en ce que** l'épaisseur de la plaque en nanotubes de carbone est comprise entre 5 micromètres et 50 micromètres.

3. La pièce intermédiaire en composite renforcé selon les revendications 1 ou 2,
**caractérisée en ce que** la densité des nanotubes de carbone est comprise entre 1 et 3 g/cm³, assurant ainsi le liant avec une porosité déterminée.

4. La pièce intermédiaire en composite renforcé selon une des revendications 1 à 3, quelle qu'elle soit,
**caractérisée en ce que** l'ensemble composite comprend des éléments pré-imprégnés (prepreg) (1) et un élément prédurci (4).

5. Une structure composite renforcée et durcie comprenant au moins une pièce intermédiaire en composite renforcé selon une des revendications 1 à 4, quelle qu'elle soit.
